# EUROPEAN PATENT APPLICATION

(11) **EP 2 034 356 A2**
(43) Date of publication of application: **11.03.2009**
(21) Application number: 08157371.9
(22) Date of filing: 30.05.2008
(51) Int. Cl.: G03B 15/05

(54) **Photographic flash power control unit**

(30) Priority: 09.06.2007 GB 0711199
(71) Applicant: Bowens International Limited, Clacton on Sea, Essex CO15 3RH (GB)
(72) Inventor: Aherne, Mark, Clacton on Sea, Essex CO15 3RH (GB)
(74) Representative: Copp, David Christopher

(57) **Abstract**

A photographic flash power control unit has two controls for adjusting the light output in F stops. One control increments the output in whole F stops and the other increments the output in tenths of F stops.

## Description

This invention relates to a combined photographic flash power control and display system - that is to say, a method and embodiment by which the power level of a photographic flash product may be displayed and adjusted in increments of one tenth of an F-Stop over several F-Stops of range, thereby making the control and adjustment both cost effective and intuitively convenient.

In recent years, there has been a demand for greater accuracy in the control and delivery of photographic flash power from professional photographic lighting products. This demand has been driven mostly by the proliferation of digital image capturing capability with a subsequent greater scrutiny of the photographic results. In addition, typical light meters tend to measure the light output to an accuracy of 1/10 F stop and consequently there is an expectation that flash products should be capable of delivering such increments in light output. To address these demands, photo flash product manufacturers have generally chosen to incorporate digital displays in various forms in order to numerically represent the digital F stop power settings for their products. Such displays typically include LCD and LED type numeric displays, usually showing the power level in terms of a decimal number, whereby the number to the left of the decimal point represents whole digital F stops while the number to the right of the decimal point represents tenths of a digital F stop.

In order to make adjustments to the flash power, manufacturers generally adopt one of two methods by which the numeric value may be increased or decreased. One method often used is to employ two or more pushbuttons denoted as increment and decrement. On pressing these buttons, the display will either increment or decrement in steps of one tenth of an F stop. As an alternative to pushbuttons another common solution is to use a single rotary control knob which will again cause the display to increment or decrement in steps of one tenth of an F stop, depending upon the direction of rotation. With both solutions, there is a fundamental need to provide a digital display along with the adjustment mechanism and this makes the solution slightly cumbersome. Indeed, it is very difficult to provide a digital display that works well for all types of ambient lighting condition.

A further problem with the current solutions described above is that adjusting a product over it's full range of power requires many changes in the display until the desired level is obtained. For example, a unit with a 6 F Stop range requires 60 one tenth F Stop increments to cover the entire product power range, which can become tedious for the user when operating either push buttons or a single rotary control knob. Photographers generally want to operate and think in terms of F stops and tenths of F stops and when setting up a shoot, will often want to hone in on the correct lighting level by a short series of iterations in the light output setting.

By way of example only, a photographer may start off at a point half an F Stop down from full power and end up at a correct light level 1.6 F Stops down from the starting point. To iterate through this, the photographer may first shoot at the initial level, then drop down one stop and repeat, drop down a further stop and repeat, increase by half a stop and finally decrease by one tenth.

When using a digital display with a full power scale reading of 10.0, the initial starting display will indicate 9.5. The user then operates buttons or the rotary control through 10 numerics, to obtain a display of 8.5. After shooting, this is then repeated to obtain a display of 7.5. After testing, the adjustment is made to give 8.0 and then finally again to give 7.9. Overall, the user has been required to observe 26 numeric changes which he/she must mentally note in order to verify the change he/she is expecting.

While it is possible, to provide an additional control to change the incremental steps in such a system in order to reduce the number of steps overall, fundamentally this type of interface does not align itself well with the application. Photographers can typically make a 1 Stop adjustment to their photograph by a single adjustment on their cameras and hence it would be desirable to provide similar simplicity and flexibility in the photographic flash product.

According to the invention, there is provided a photographic flash power control unit with means for adjusting the power level of the light output in terms of F stops, wherein the adjustment means has one control for adjusting the output in whole F stops and another control for adjusting the output in tenths of F stops.

The controls are preferably rotary knobs with pointers and a visual numerical scale marked on the unit, around the path of movement of the knobs. Integers of the numerical scale are associated with detents which locate the knobs in discrete positions associated with each of the integers.

If desired, a digital display which displays the setting which has been set by the controls may be provided on the unit and this could be useful, for example, if the unit is operating in low light conditions where a display may be easier to read than the scale surrounding the knobs.

In viewing the controls, their periphery scale and the alignment of the control markers, a decimal F Stop reading is immediately and conveniently available to the user. Furthermore, step adjustments of either one tenth of a stop or in whole F stops are immediately obviously and convenient, by virtue of the controls and scale which provide a clear, visual and relative reference point before and after the adjustment.

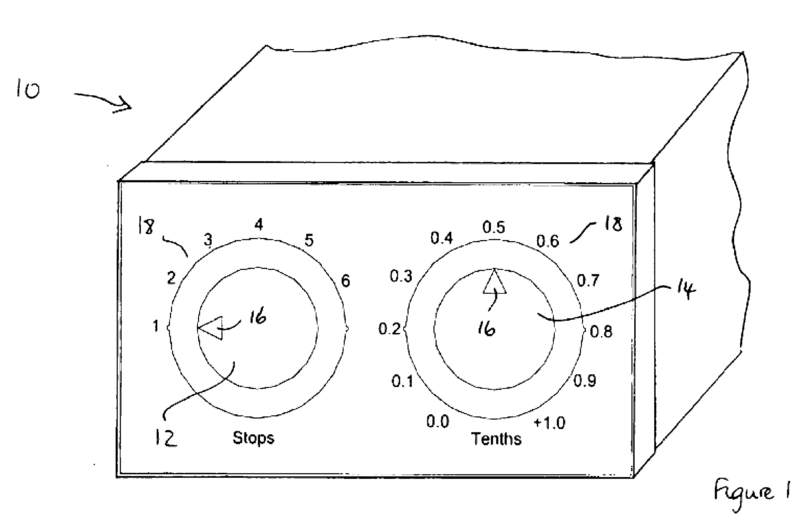

The invention will now be further described, by way of example, with reference to the accompanying drawings, in which Figure 1 is a schematic view of one face of a photographic flash power unit.

In this example rotary controls are used to represent and adjust the light output level. In other embodiments, these controls could be arranged using linear devices and scales in a similar fashion with one control divided into F stops and another control is divided into tenths of an F stop.

It is particularly convenient if the two controls are arranged side by side, with the F stop control to the left and the tenths control to the right, so that the current setting can be easily read off from the two controls.

Fig 1 shows part of a control unit 10 with two control knobs 12, 14 arranged on one face and connected to detented rotary switches. As either knob is rotated, an arrow indicator 16 on the knob will align with a peripheral scale 18 and will be held in a position corresponding to one integer of the scale by virtue of the detents. In viewing the two knobs, a decimal F stop reading is available by simply reading the scales from left to right, in this case, a setting of 1.5 is shown. Since it is common to want to adjust the power output in either steps of one tenth of a stop or in whole stops, this can be done by rotating the relevant control knob or knobs. For example, to achieve a setting of 2.5, it is only necessary to move the left hand knob one notch, or to achieve a setting of 2.6, it is necessary to move the left hand knob one notch and the right hand knob one notch.

The arrangement provides an extremely quick method of making an adjustment. Because the light output level can be easily read off from the two dials shown, a separate digital or other display is not necessary (although one may still be provided if desired).

## Claims

1. A photographic flash power control unit with means for adjusting the power level of the light output in terms of F stops, wherein the adjustment means has one control for adjusting the output in whole F stops and another control for adjusting the output in tenths of F stops.

2. A control unit as claimed in Claim 1, wherein the controls are rotary knobs.

3. A control unit as claimed in Claim 2, wherein the knobs have pointers and a visual numerical display as printed on the unit, around the path of movement of the knobs.

4. A control unit as claimed in Claim 2 or Claim 3, wherein integers of the numerical display are associated with detents which locate the knobs in discrete positions associated with each of the integers.

5. A control unit as claimed in any one of Claims 2 to 4, wherein the knobs are arranged side by side, with the knob for adjusting in whole F stops being on the left and the knob for adjusting in tenths of F stops being on the right.

6. A control unit as claimed in any preceding claim, including a digital display which displays the setting which has been set by the controls.
